# EUROPÄISCHE PATENTSCHRIFT

(11) **EP 4 072 915 B1**
(45) Veröffentlichungstag und Bekanntmachung des Hinweises auf die Patenterteilung: **06.08.2025**
(21) Anmeldenummer: 20801175.9
(22) Anmeldetag: 28.10.2020
(51) Int. Cl.: B60T 8/36, F16K 31/06

(54) **ELEKTROMAGNETVENTIL**
ELECTROMAGNETIC VALVE
SOUPAPE ELECTROMAGNETIQUE

(30) Priorität: 09.12.2019 DE 102019133479
(43) Veröffentlichungstag der Anmeldung: 19.10.2022
(73) Patentinhaber: Thomas Magnete GmbH, 57562 Herdorf (DE)
(72) Erfinder: BUSS, Juri, 57537 Wissen (DE); FERRES, Daniel, 57518 Betzdorf (DE); ZASTRAU, Thomas, 57076 Siegen (DE); ERHARD, Michael, 01309 Dresden (DE)
(86) Internationale Anmeldenummer: PCT/EP2020/080279
(87) Internationale Veröffentlichungsnummer: WO 2021/115679

(56) Entgegenhaltungen:
- DE-A1- 102012 010 986
- DE-A1- 102014 015 559
- DE-A1- 4 221 757
- DE-A1- 4 406 777

## Beschreibung

Die Erfindung betrifft ein Elektromagnetventil, aufweisend einen Elektromagneten, der mindestens eine Magnetspule, einen Magnetanker, einen Polkern, ein Magnetjoch und ein den Magnetkreis schließendes Gehäuse enthält, und eine Ventilbaugruppe, die mindestens eine Ventilhülse, einen Ventilschieber und eine Rückstellfeder enthält, wobei die Ventilbaugruppe vollständig von dem Gehäuse umfasst ist.

Aus dem Stand der Technik sind beispielsweise die Druckschriften DE 10 2012 010 986 A1 und DE 10 2014 015 559 A1 bekannt, die Elektromagnetventile beschreiben, deren Ventilbaugruppen von dem Gehäuse des Elektromagneten umfasst werden. Die Herstellung dieser Elektromagnetventile ist aufwändig und die im Betrieb der Elektromagneten auftretende Festkörperreibung mindert die Genauigkeit hinsichtlich der von den Elektromagnetventilen erzeugten Funktionskette.

Es ist Aufgabe der vorliegenden Erfindung, die Herstellung des Elektromagnetventils zu vereinfachen und kostengünstiger zu machen und in einer Weiterführung der Erfindung die Festkörperreibung zwischen den beweglichen Bauteilen zu vermindern.

Die Lösung dieser Aufgaben erfolgt durch die Merkmale des ersten Patentanspruchs, die Unteransprüche bilden diese Lösung fort.

Die Erfindung schließt die technische Lehre ein, dass der Polkern aus einem äußeren Magnetpol und einer von dem Magnetpol umfassten Ventilhülse besteht, wobei zwischen der Ventilhülse und dem Magnetpol in fluiddichtend abgegrenzten Zonen auf dem Umfang der Ventilhülse mindestens zwei Fluidkanäle in axialer Richtung der genannten Bauteile verlaufen.

Dabei weist die Ventilhülse mindestens zwei im rechten Winkel zur Mittelachse der Ventilhülse verlaufende Hohlräume, vorzugsweise Querbohrungen, auf, die mit den oben genannten Fluidkanälen fluidisch verbunden sind und im Zusammenwirken mit den Steuerkanten des Ventilschiebers in Abhängigkeit von der axialen Lage des Ventilschiebers die Funktion der Ventilbaugruppe bestimmen.

Durch die zwischen der Ventilhülse und dem Magnetpol angeordneten Fluidkanäle wird eine sehr kostengünstig herstellbare fluidische Verbindung zwischen den Querbohrungen in der Ventilhülse und den fluidischen Anschlüssen dargestellt, und die Querbohrungen erzeugen in kostengünstiger Weise Steuerkanten, die mit den Steuerkanten des Ventilschiebers das Ventil öffnend oder schließend zusammenwirken. Auf diese Weise lassen sich in bekannter Weise Druckregelfunktionen, Drosselfunktionen oder Schaltfunktionen als Ventilfunktionen darstellen, wobei Drosselfunktionen und Schaltfunktionen in bekannter Weise über den durch den Elektromagneten gegen die Kraft der Rückstellfeder erzeugten Hub des Ventilschiebers wirken, während Druckregelfunktionen in bekannter Weise erreicht werden, indem eine auf den Ventilschieber wirkende Druckkraft mit der ebenfalls auf den Ventilschieber wirkenden Kraft des Elektromagneten mechanisch verglichen wird, und der aus dem Kraftunterschied resultierende Ventilschieberhub fluidische Durchflüsse vom P-Anschluss zum A-Anschluss oder vom A-Anschluss zum T-Anschluss freigibt.

Die abhängigen Ansprüche beinhalten vorteilhafte Weiterbildungen der Erfindung.

Vorteilhafterweise verlaufen in einer ersten Ausführung die mindestens zwei Fluidkanäle für die Anschlüsse P und T in Aushöhlungen des Magnetpols, wobei die axialen Längen der Aushöhlungen so bemessen sind, dass einerseits eine Fluidverbindung zu jeweils einer abgedichteten Flanschzone einer Flanschfläche besteht und andererseits jeweils eine Fluidverbindung zu den Querbohrungen in der Ventilhülse besteht und ferner eine Fluidverbindung des Anschlusses P zu einem Ankerraum des Elektromagneten versperrt ist.

Dabei sind die Anschlüsse P und T an die Flanschzonen der Flanschfläche angeschlossen, und der Ankerraum des Elektromagneten ist vorzugsweise mit dem Anschluss T verbunden, über den von dem Anschluss T ausgehenden Fluidkanal oder über eine andere fluidische Verbindung.

Ein Verlauf der Fluidkanäle in den Aushöhlungen des Magnetpols lässt sich in besonders kostengünstiger Weise darstellen, wenn der Magnetpol durch einen Sinterprozess hergestellt wird, dabei werden die Fluidkanäle durch das Presswerkzeug erzeugt. Der dritte Fluidkanal für den Anschluss A ist bei dieser Ausführung durch eine zentrale Bohrung in der Ventilhülse dargestellt, die auch den Ventilschieber aufnimmt. Der dritte Fluidkanal benötigt in dieser Ausführung keine zusätzliche Aushöhlung.

In einer zweiten vorteilhaften Ausführung verlaufen die Fluidkanäle für die Anschlüsse P und T in Abflachungen und/oder in Nuten der Ventilhülse, wobei ebenfalls die axialen Längen der Abflachungen so bemessen sind, dass einerseits eine Fluidverbindung zu jeweils einer abgedichteten Flanschzone einer Flanschfläche besteht und andererseits jeweils eine Fluidverbindung zu den Querbohrungen in der Ventilhülse besteht und ferner eine fluidische Verbindung des Anschlusses P zum Ankerraum versperrt ist.

Auch bei dieser zweiten Ausführung sind keine axialen oder schrägverlaufenden Bohrungen für die Fluidkanäle P und T erforderlich.

Die genannten axial verlaufenden Fluidkanäle werden vorzugsweise als Abflachungen ausgeführt, wenn aber größere Querschnitte erforderlich sind oder Abflachungen herstellungsbedingt ausgeschlossen werden sollen, werden sie als Nuten ausgeführt oder es werden sowohl Abflachungen und Nuten vorgesehen.

In einer Variante der ersten Ausführung verlaufen nicht nur zwei, sondern drei Fluidkanäle für die Anschlüsse P, T und A in Aushöhlungen des Magnetpols, wobei die Längen der Aushöhlungen so bemessen sind, dass einerseits eine Fluidverbindung zu jeweils einer abgedichteten Flanschzone einer Flanschfläche besteht und andererseits jeweils eine Fluidverbindung zu der ersten und der zweiten Querbohrung und zu einer dritten Querbohrung in der Ventilhülse besteht und ferner jeweils eine Fluidverbindung der Anschlüsse P und A zum Ankerraum des Elektromagneten versperrt ist.

Bei dieser Variante der ersten Ausführung sind alle drei Flanschzonen auf der Flanschfläche im gleichen Abstand vom Zentrum der Flanschfläche angeordnet, daher steht für den Anschluss A mehr Raum zur Verfügung. Hier besteht für den Konstrukteur die Freiheit, eine Stirnfläche des Ventilschiebers mit dem Druck des Anschlusses A zu beaufschlagen oder ihn nicht zu beaufschlagen, je nach der Ausführung des Ventilschiebers und der Aufgabe des Ventils.

In einer Variante der zweiten Ausführung verlaufen drei Fluidkanäle für die Anschlüsse P, T und A in Abflachungen der Ventilhülse, wobei wieder die Längen der Abflachungen so bemessen sind, dass einerseits eine Fluidverbindung zu jeweils einer abgedichteten Flanschzone einer Flanschfläche besteht und andererseits jeweils eine Fluidverbindung zu der ersten und der zweiten Querbohrung und einer dritten Querbohrung in der Ventilhülse besteht und ferner jeweils eine Fluidverbindung der Anschlüsse P und A zum Ankerraum versperrt ist.

In einer vorteilhaften Ausführung ist der Magnetanker einerseits in einem Lager und andererseits durch einen Schieberkopf des Ventilschiebers radial gelagert, wobei der Magnetanker mit einer konischen Fläche den Schieberkopf berührt und wobei radiale Kräfte von dem Magnetanker auf den Schieberkopf übertragbar sind. Bei dieser Ausführung lässt sich eine hohe Genauigkeit der relativen radialen Lage des Magnetankers zu dem Magnetpol kostengünstig erzeugen, ohne eine zusätzliche Lagerung des Magnetankers in dem Magnetpol. Die Festkörperreibung am Magnetanker ist bei dieser Ausführung besonders gering.

In einer anderen vorteilhaften Ausführung entspricht die wirksame Länge des Lagers zur Lagerung des Magnetankers mindestens einem Drittel der Länge des Magnetankers, vorzugsweise der Hälfte der Länge und weiter vorzugsweise 70% der Länge, wobei der Magnetanker mit einer Planfläche den Schieberkopf des Ventilschiebers berührt, und wobei der Ventilschieber einen abgeflachten Schieberkopf aufweist, der nur eine Übertragung einer axialen Druckkraft von dem Magnetanker auf den Schieberkopf zulässt.

Bei dieser Ausführung handelt es sich um eine bewährte Bauchlagerung des Magnetankers, der abgeflachte Schieberkopf verhindert die Übertragung von radialwirkenden Kräften auf den Ventilschieber, der wegen seines geringen Durchmesserspiels relativ zur Ventilhülse nur geringe radiale Kräfte aufnehmen kann, wenn seine Festkörperreibung klein bleiben soll.

Bei der ersten Ausführung des Elektromagnetventils weist die Flanschfläche drei Flanschzonen auf, wobei die dritte Flanschzone fluidisch mit einer zentralen Bohrung in der Ventilhülse verbunden ist, die den Ventilschieber aufnimmt, und wobei die drei Flanschzonen gegeneinander und zur Umgebung durch eine Formdichtung abgedichtet sind.

Die Anwendung der Formdichtung vereinfacht den Zusammenbau des Elektromagnetventils mit einer weiteren Vorrichtung, die das Elektromagnetventil trägt und die genannten fluidischen Leitungen enthält.

Auch bei der zweiten Ausführung des Elektromagnetventils sind die drei Flanschzonen gegeneinander und zur Umgebung durch eine Formdichtung abgedichtet, allerdings ist hier keine zentrale Flanschzone für den Anschluss A vorgesehen. Die Flanschzone für den Anschluss A kann bei dieser zweiten Ausführung größer ausgeführt werden als bei der ersten Ausführung.

Vorteilhafterweise enthält die Formdichtung drei Filtermatten, die in den Flanschzonen angeordnet sind und mit dem Material der Formdichtung kraftschlüssig, formschlüssig oder stoffschlüssig verbunden sind. Die Anordnung der Filter als Filtermatten in der Formdichtung vereinfacht den Zusammenbau und mindert damit die Herstellkosten.

Das erfindungsgemäße Elektromagnetventil ist beispielsweise als Druckregelventil in der Bauform eines Drei-Wege-Druckregelventils anwendbar, wobei ein erstes Volumen mit einem zu regelnden fluidischen Druck an den Anschluss A angeschlossen ist, ein zweites Volumen mit einem Versorgungsdruck an den Anschluss P angeschlossen ist und eine zu einem Vorratstank führende Leitung an den Anschluss T angeschlossen ist.

Dabei erfolgt in dem Elektromagnetventil an dem Ventilschieber ein Kraftvergleich zwischen der Kraft des Elektromagneten und der Druckkraft des Fluids am Anschluss A, wobei in dem Fall, dass die Kraft des Elektromagneten überwiegt, in der Ventilbaugruppe eine fluidische Verbindung zwischen dem Anschluss P und dem Anschluss A erfolgt, und wobei in dem Fall, dass die genannte Druckkraft überwiegt, eine fluidische Verbindung zwischen dem Anschluss A und dem Anschluss T erfolgt.

Das erfindungsgemäße Elektromagnetventil ist bei einer geeigneten Auslegung der Bauteile der Ventilbaugruppe auch in bekannter Weise als fluidisches Schaltventil (auch Wegeventil genannt) anwendbar, indem bei nicht bestromtem Elektromagneten in der Ventilbaugruppe eine fluidische Verbindung zwischen dem Anschluss A und dem Anschluss T besteht und/oder bei ausreichend bestromtem Elektromagneten in der Ventilbaugruppe eine fluidische Verbindung zwischen dem Anschluss P und dem Anschluss A besteht.

Es ist auch eine Anwendung der Erfindung möglich, die bei nicht bestromtem Elektromagneten in der Ventilbaugruppe eine fluidische Verbindung zwischen dem Anschluss P und dem Anschluss A darstellt und/oder bei ausreichend bestromtem Elektromagneten in der Ventilbaugruppe eine fluidische Verbindung zwischen dem Anschluss A und dem Anschluss T darstellt.

Dabei liegt eine ausreichende Bestromung des Elektromagneten dann vor, wenn die aus der Bestromung resultierende Magnetkraft unter allen bestimmungsgemäßen Betriebsbedingungen ausreicht, den Ventilschieber gegen die Kraft der Rückstellfeder, gegen die wirkenden Druckkräfte der angeschlossenen fluidischen Volumina und gegen die Reibkräfte am Ventilschieber aus einer Ruhelage in eine Arbeitslage zu bringen, wobei in der Arbeitslage die fluidische Verbindung zwischen dem Anschluss P und dem Anschluss A besteht.

Bei einer geeigneten Auslegung lässt sich das Wegeventil auch in bekannter Weise proportionalwirkend betreiben, dann entspricht dem elektrischen Strom durch die Magnetspule ein proportionaler Hub des Ventilschiebers, der seinerseits die fluidischen Verbindungen durch die Ventilbaugruppe bestimmt. Dabei ist der Ventilschieber so ausgeführt, dass er keine Wirkfläche für die angeschlossenen Drücke der Anschlüsse A und P aufweist.

Weitere Einzelheiten, Merkmale und Vorteile der Erfindung ergeben sich aus nachfolgender Beschreibung anhand der Zeichnung.

Es zeigt:
- Figur 1: eine Schnittdarstellung der ersten Ausführung des Elektromagnetventils,
- Figur 2: eine Schnittdarstellung der zweiten Ausführung des Elektromagnetventils
- Figur 3: eine Schnittdarstellung der dritten Ausführung des Elektromagnetventils
- Figur 4: eine Ansicht der Formdichtung der ersten Ausführung mit der Filtermatte
- Figur 5: eine Ansicht der Formdichtung der zweiten Ausführung
- Figur 6: eine Schnittdarstellung der vierten Ausführung des Elektromagnetventils

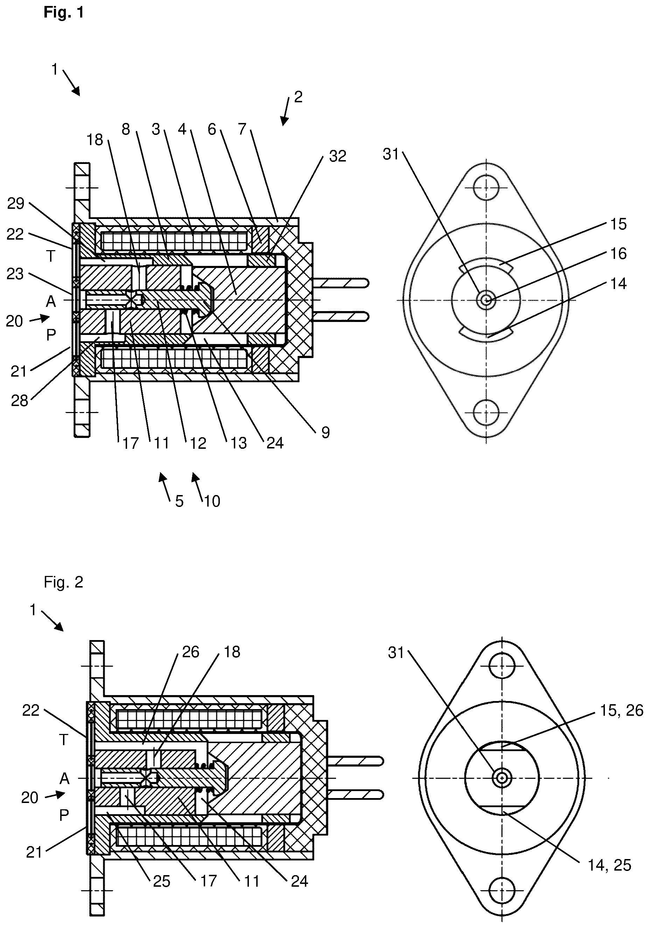

Figur 1 zeigt ein erfindungsgemäßes Elektromagnetventil 1, das einen Elektromagneten 2 aufweist, der eine Magnetspule 3, einen Magnetanker 4, einen Polkern 5, ein Magnetjoch 6 und ein den Magnetkreis schließendes Gehäuse 7 enthält. Das Elektromagnetventil 1 weist ferner eine Ventilbaugruppe 10 auf, die eine Ventilhülse 11, einen Ventilschieber 12 und eine Rückstellfeder 13 enthält, wobei die Ventilbaugruppe 10 vollständig von dem Gehäuse 7 umfasst ist.

Der Polkern 5 besteht aus einem äußeren Magnetpol 8 und einer von dem Magnetpol 8 umfassten Ventilhülse 11, wobei zwischen der Ventilhülse 11 und dem Magnetpol 8 in fluiddichtend abgegrenzten Zonen auf dem Umfang der Ventilhülse 11 mindestens zwei Fluidkanäle 14, 15 in axialer Richtung verlaufen.

Dabei weist die Ventilhülse 11 mindestens zwei Querbohrungen 17, 18 auf, die mit den Fluidkanälen 14, 15 fluidisch verbunden sind und im Zusammenwirken mit Steuerkanten des Ventilschiebers 12 in Abhängigkeit von einer axialen Lage des Ventilschiebers 12 die Ventilfunktion ausüben.

In der Ausführung des Elektromagnetventils 1 entsprechend Figur 1 verlaufen die mindestens zwei Fluidkanäle 14, 15 für die Anschlüsse P und T in Aushöhlungen 28, 29 des Magnetpols 8, wobei die axialen Längen der Aushöhlungen 28, 29 so bemessen sind, dass einerseits eine Fluidverbindung zu jeweils einer abgedichteten Flanschzone 21, 22 einer Flanschfläche 20 besteht und andererseits jeweils eine Fluidverbindung zu den Querbohrungen 17, 18 in der Ventilhülse 11 besteht und ferner eine Fluidverbindung des Anschlusses P zum Ankerraum 24 versperrt ist.

In der Ausführung des Elektromagnetventils 1 entsprechend Figur 2 verlaufen die Fluidkanäle 14, 15 für die Anschlüsse P und T in Abflachungen 25, 26 der Ventilhülse 11, wobei die axialen Längen der Abflachungen 25, 26 so bemessen sind, dass einerseits eine Fluidverbindung zu jeweils einer abgedichteten Flanschzone 21, 22 einer Flanschfläche 20 besteht und andererseits jeweils eine Fluidverbindung zu den Querbohrungen 17, 18 in der Ventilhülse 11 besteht und ferner eine fluidische Verbindung des Anschlusses P zum Ankerraum 24 versperrt ist.

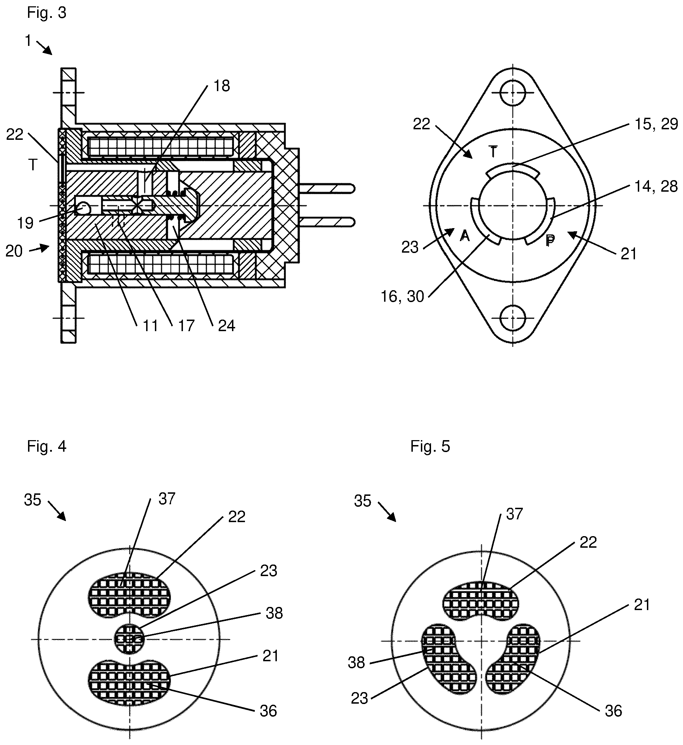

In der Ausführung des Elektromagnetventils 1 entsprechend Figur 3 verlaufen drei Fluidkanäle 14, 15, 16 für die Anschlüsse P, T und A in Aushöhlungen 28, 29, 30 des Magnetpols 8, wobei die axialen Längen der Aushöhlungen 28, 29, 30 so bemessen sind, dass einerseits eine Fluidverbindung zu jeweils einer abgedichteten Flanschzone 21, 22, 23 einer Flanschfläche 20 besteht und andererseits jeweils eine Fluidverbindung zu der ersten und der zweiten Querbohrung 17, 18 und zu einer dritten Querbohrung 19 in der Ventilhülse 11 besteht und ferner jeweils eine Fluidverbindung der Anschlüsse P und A zum Ankerraum 24 versperrt ist.

In einer nicht dargestellten weiteren Ausführung verlaufen drei Fluidkanäle 14, 15, 16 für die Anschlüsse P, T und A in Abflachungen 25, 26, 27 der Ventilhülse 11, wobei die Längen der Abflachungen 25, 26, 27 so bemessen sind, dass einerseits eine Fluidverbindung zu jeweils einer abgedichteten Flanschzone 21, 22, 23 einer Flanschfläche 20 besteht und andererseits jeweils eine Fluidverbindung zu der ersten und der zweiten Querbohrung 17, 18 und einer dritten Querbohrung 19 in der Ventilhülse 11 besteht und ferner jeweils eine Fluidverbindung der Anschlüsse P und A zum Ankerraum 24 versperrt ist.

In den Ausführungen des Elektromagnetventils 1 entsprechend Figur 1 ist der Magnetanker 4 einerseits in einem Lager 32 und andererseits in einem Schieberkopf 9 des Ventilschiebers 12 radial gelagert, wobei der Magnetanker 4 mit einer konischen Fläche den Schieberkopf 9 berührt, und wobei radiale Kräfte von dem Magnetanker 4 auf den Schieberkopf 9 übertragbar sind.

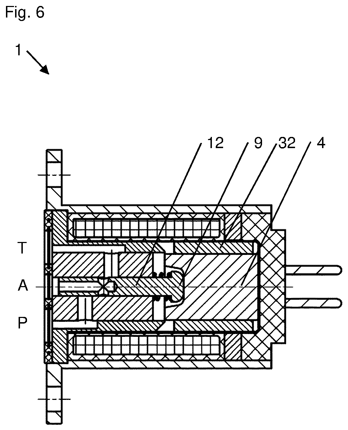

In der Ausführung des Elektromagnetventils 1 gemäß Figur 6 entspricht die wirksame Länge des Lagers 32 zur Lagerung des Magnetankers 4 mindestens einem Drittel der Länge des Magnetankers 4, vorzugsweise der Hälfte der Länge und weiter vorzugsweise 70% der Länge, wobei der Magnetanker 4 mit einer Planfläche den Schieberkopf 9 des Ventilschiebers 12 berührt und wobei der Ventilschieber 12 einen abgeflachten Schieberkopf 9 aufweist, der nur eine Übertragung einer axialen Druckkraft von dem Magnetanker 4 auf den Schieberkopf 9 zulässt.

In der Ausführung des Elektromagnetventils 1 gemäß Figur 1 und Figur 2 weist die Flanschfläche 20 drei Flanschzonen 21, 22, 23 auf, wobei die dritte Flanschzone 23 fluidisch mit einer zentralen Bohrung 31 in der Ventilhülse 11 verbunden ist, die den Ventilschieber 12 aufnimmt, und wobei die drei Flanschzonen 21, 22, 23 gegeneinander und zur Umgebung durch eine in Figur 4 dargestellte Formdichtung 35 abgedichtet sind.

Die Figur 5 zeigt die Formdichtung für ein Elektromagnetventil in der Ausführung gemäß Figur 3, wobei auch hier die drei Flanschzonen 21, 22, 23 gegeneinander und zur Umgebung durch eine Formdichtung 35 abgedichtet sind.

In den Ausführungen der Formdichtung 35 gemäß den Figuren 4 und 5 enthält die Formdichtung 35 jeweils drei Filtermatten 36, 37, 38, die in den Flanschzonen 21, 22, 23 angeordnet sind und mit dem Material der Formdichtung kraftschlüssig, formschlüssig oder stoffschlüssig verbunden sind.

Die vorhergehende Beschreibung gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den durch den Gegenstand der anhängenden Ansprüche definierten Umfang der Erfindung zu verlassen.

### Bezugszeichenliste

- 1: Elektromagnetventil
- 2: Elektromagnet
- 3: Magnetspule
- 4: Magnetanker
- 5: Polkern
- 6: Magnetjoch
- 7: Gehäuse
- 8: Magnetpol
- 9: Schieberkopf
- 10: Ventilbaugruppe
- 11: Ventilhülse
- 12: Ventilschieber
- 13: Rückstellfeder
- 14: Erster Fluidkanal
- 15: Zweiter Fluidkanal
- 16: Dritter Fluidkanal
- 17: Erste Querbohrung
- 18: Zweite Querbohrung
- 19: Dritte Querbohrung
- 20: Flanschfläche
- 21: Erste Flanschzone
- 22: Zweite Flanschzone
- 23: Dritte Flanschzone
- 24: Ankerraum
- 25: Erste Abflachung
- 26: Zweite Abflachung
- 27: Dritte Abflachung
- 28: Erste Aushöhlung
- 29: Zweite Aushöhlung
- 30: Dritte Aushöhlung
- 31: Bohrung
- 32: Lager
- 35: Formdichtung
- 36: Filtermatte
- 37: Filtermatte
- 38: Filtermatte

## Patentansprüche

1. Elektromagnetventil (1) aufweisend einen Elektromagneten (2), der mindestens eine Magnetspule (3), einen Magnetanker (4), einen Polkern (5), ein Magnetjoch (6) und ein den Magnetkreis schließendes Gehäuse (7) enthält, und eine Ventilbaugruppe (10), die mindestens eine Ventilhülse (11), einen Ventilschieber (12) und eine Rückstellfeder (13) enthält, wobei die Ventilbaugruppe (10) in ihrer axialen Erstreckung von dem Gehäuse (7) umfasst ist,
**dadurch gekennzeichnet, dass**
der Polkern (5) aus einem äußeren Magnetpol (8) und einer von dem Magnetpol (8) umfassten Ventilhülse (11) besteht, wobei zwischen der Ventilhülse (11) und dem Magnetpol (8) in fluiddichtend abgegrenzten Zonen auf dem Umfang der Ventilhülse (11) und/oder innerhalb des Magnetpols (8) mindestens zwei Fluidkanäle (14, 15) in axialer Richtung verlaufen,
und wobei die Ventilhülse (11) mindestens zwei Querbohrungen (17, 18) oder andere senkrecht zur Mittelachse der Ventilhülse (11) verlaufende Hohlräume aufweist, die mit den Fluidkanälen (14, 15) fluidisch verbunden sind und mit Steuerkanten des Ventilschiebers (12) in Abhängigkeit von einer axialen Lage des Ventilschiebers (12) zusammenwirken.

2. Elektromagnetventil (1) nach Anspruch 1, **dadurch gekennzeichnet, dass** die mindestens zwei Fluidkanäle (14, 15) für die Anschlüsse P und T in Aushöhlungen (28, 29) des Magnetpols (8) verlaufen, wobei die axialen Längen der Aushöhlungen (28, 29) so bemessen sind, dass einerseits eine Fluidverbindung zu jeweils einer abgedichteten Flanschzone (21, 22) einer Flanschfläche (20) besteht und andererseits jeweils eine Fluidverbindung zu den Querbohrungen (17, 18) in der Ventilhülse (11) besteht und ferner eine Fluidverbindung des Anschlusses P zu einem Ankerraum (24) versperrt ist.

3. Elektromagnetventil (1) nach Anspruch 1, **dadurch gekennzeichnet, dass** die Fluidkanäle (14, 15) für die Anschlüsse P und T in Abflachungen (25, 26) und/oder Nuten der Ventilhülse (11) verlaufen, wobei die axialen Längen der Abflachungen (25, 26) und/oder Nuten so bemessen sind, dass einerseits eine Fluidverbindung zu jeweils einer abgedichteten Flanschzone (21, 22) einer Flanschfläche (20) besteht und andererseits jeweils eine Fluidverbindung zu den Querbohrungen (17, 18) in der Ventilhülse (11) besteht und ferner eine fluidische Verbindung des Anschlusses P zum Ankerraum (24) versperrt ist.

4. Elektromagnetventil (1) nach Anspruch 1, **dadurch gekennzeichnet, dass** drei Fluidkanäle (14, 15, 16) für die Anschlüsse P, T und A in Aushöhlungen (28, 29, 30) des Magnetpols (8) verlaufen, wobei die Längen der Aushöhlungen (28, 29, 30) so bemessen sind, dass einerseits eine Fluidverbindung zu jeweils einer abgedichteten Flanschzone (21, 22, 23) einer Flanschfläche (20) besteht und andererseits jeweils eine Fluidverbindung zu der ersten und der zweiten Querbohrung (17, 18) und zu einer dritten Querbohrung (19) in der Ventilhülse (11) besteht und ferner jeweils eine Fluidverbindung der Anschlüsse P und A zum Ankerraum (24) versperrt ist.

5. Elektromagnetventil (1) nach Anspruch 1, **dadurch gekennzeichnet, dass** drei Fluidkanäle (14, 15, 16) für die Anschlüsse P, T und A in Abflachungen (25, 26, 27) und/oder Nuten der Ventilhülse (11) verlaufen, wobei die Längen der Abflachungen (25, 26, 27) und/oder Nuten so bemessen sind, dass einerseits eine Fluidverbindung zu jeweils einer abgedichteten Flanschzone (21, 22, 23) einer Flanschfläche (20) besteht und andererseits jeweils eine Fluidverbindung zu der ersten und der zweiten Querbohrung (17, 18) und einer dritten Querbohrung (19) in der Ventilhülse (11) besteht und ferner jeweils eine Fluidverbindung der Anschlüsse P und A zum Ankerraum (24) versperrt ist.

6. Elektromagnetventil (1) nach einem der vorstehenden Ansprüche, **dadurch gekennzeichnet, dass** der Magnetanker (4) einerseits in einem Lager (32) und andererseits durch einen Schieberkopf (9) des Ventilschiebers (12) radial gelagert ist, wobei radiale Kräfte von dem Magnetanker (4) auf den Schieberkopf (9) übertragbar sind.

7. Elektromagnetventil (1) nach einem der Anspruch 6, **dadurch gekennzeichnet, dass** die wirksame Länge des Lagers (32) zur Lagerung des Magnetankers (4) mindestens einem Drittel der Länge des Magnetankers (4) entspricht, vorzugsweise der Hälfte der Länge und weiter vorzugsweise 70% der Länge, wobei der Ventilschieber (12) einen abgeflachten Schieberkopf (9) aufweist, der nur eine Übertragung einer axialen Druckkraft von dem Magnetanker (4) auf den Schieberkopf (9) zulässt.

8. Elektromagnetventil (1) nach Anspruch 6, **dadurch gekennzeichnet, dass** der Magnetanker (4) mit einer konischen Fläche den Schieberkopf (9) berührt.

9. Elektromagnetventil (1) nach Anspruch 7, **dadurch gekennzeichnet, dass** der Magnetanker (4) mit einer Planfläche den Schieberkopf (9) des Ventilschiebers (12) berührt.

10. Elektromagnetventil (1) nach einem der Ansprüche 2 oder 3, **dadurch gekennzeichnet, dass** die Flanschfläche (20) drei Flanschzonen (21, 22, 23) aufweist, wobei die dritte Flanschzone (23) fluidisch mit einer zentralen Bohrung (31) in der Ventilhülse (11) verbunden ist, die den Ventilschieber (12) aufnimmt, und wobei die drei Flanschzonen (21, 22, 23) gegeneinander und zur Umgebung durch eine Formdichtung (35) abgedichtet sind.

11. Elektromagnetventil (1) nach einem der Ansprüche 4 oder 5, **dadurch gekennzeichnet, dass** die drei Flanschzonen (21, 22, 23) gegeneinander und zur Umgebung durch eine Formdichtung (35) abgedichtet sind.

12. Elektromagnetventil (1) nach einem der Ansprüche 10 oder 11, **dadurch gekennzeichnet, dass** die Formdichtung (35) drei Filtermatten (36, 37, 38) enthält, die in den Flanschzonen (21, 22, 23) angeordnet sind und mit dem Material der Formdichtung (35) kraftschlüssig, formschlüssig oder stoffschlüssig verbunden sind.

13. Druckregelventil, aufweisend ein Elektromagnetventil (1) nach einem der vorstehenden Ansprüche, **dadurch gekennzeichnet, dass** ein erstes unter Druck stehendes Volumen mit einem zu regelnden fluidischen Druck an den Anschluss A anschließbar ist, ein zweites Volumen mit einem Versorgungsdruck an den Anschluss P anschließbar ist und eine zu einem Vorratstank führende Leitung an den Anschluss T anschließbar ist, wobei in dem Elektromagnetventil (1) an dem Ventilschieber (12) ein Kraftvergleich zwischen der Kraft des Elektromagneten (2) und der Druckkraft des Fluids am Anschluss A erfolgt, und wobei in dem Fall, dass die Kraft des Elektromagneten überwiegt, in der Ventilbaugruppe (10) eine fluidische Verbindung zwischen dem Anschluss P und dem Anschluss A erfolgt, und wobei in dem Fall, dass die Druckkraft überwiegt, eine fluidische Verbindung zwischen dem Anschluss A und dem Anschluss T erfolgt.

14. Fluidisches Schaltventil, aufweisend ein Elektromagnetventil (1) nach einem der Ansprüche 1 bis 12, **dadurch gekennzeichnet, dass** bei nicht bestromtem Elektromagneten (2) in der Ventilbaugruppe (10) eine fluidische Verbindung zwischen dem Anschluss A und dem Anschluss T besteht und dass bei ausreichend bestromtem Elektromagneten (1) in der Ventilbaugruppe (10) eine fluidische Verbindung zwischen dem Anschluss P und dem Anschluss A besteht.

15. Fluidisches Schaltventil, aufweisend ein Elektromagnetventil (1) nach einem der Ansprüche 1 bis 12, **dadurch gekennzeichnet, dass** bei nicht bestromtem Elektromagneten (2) in der Ventilbaugruppe (10) eine fluidische Verbindung zwischen dem Anschluss P und dem Anschluss A besteht und dass bei ausreichend bestromtem Elektromagneten (1) in der Ventilbaugruppe (10) eine fluidische Verbindung zwischen dem Anschluss A und dem Anschluss T besteht.

## Claims

1. Solenoid valve (1) having an electromagnet (2) which contains at least one magnet coil (3), a magnet armature (4), a pole core (5), a magnet yoke (6) and a housing (7) closing the magnetic circuit, and a valve assembly (10) which contains at least one valve sleeve (11), a valve slide (12) and a restoring spring (13), wherein the valve assembly (10) is surrounded in its axial extent by the housing (7),
**characterized in that**
the pole core (5) consists of an outer magnetic pole (8) and a valve sleeve (11) surrounded by the magnetic pole (8), wherein at least two fluid channels (14, 15) run in the axial direction between the valve sleeve (11) and the magnetic pole (8) in fluid-tightly delimited zones on the periphery of the valve sleeve (11) and/or within the magnetic pole (8),
and wherein the valve sleeve (11) has at least two transverse bores (17, 18) or other cavities which run perpendicularly with respect to the centre axis of the valve sleeve (11), are fluidically connected to the fluid channels (14, 15) and interact with control edges of the valve slide (12) in a manner dependent on an axial position of the valve slide (12).

2. Solenoid valve (1) according to Claim 1, **characterized in that** the at least two fluid channels (14, 15) for the connectors P and T run in cavities (28, 29) of the magnetic pole (8), wherein the axial lengths of the cavities (28, 29) are dimensioned in such a way that firstly there is a fluid connection to in each case one sealed flange zone (21, 22) of a flange surface (20), and secondly there is in each case a fluid connection to the transverse bores (17, 18) in the valve sleeve (11), and, furthermore, a fluid connection of the connector P to an armature space (24) is blocked.

3. Solenoid valve (1) according to Claim 1, **characterized in that** the fluid channels (14, 15) for the connectors P and T run in flattened portions (25, 26) and/or grooves of the valve sleeve (11), wherein the axial lengths of the flattened portions (25, 26) and/or grooves are dimensioned in such a way that firstly there is a fluid connection to in each case one sealed flange zone (21, 22) of a flange surface (20), and secondly there is in each case a fluid connection to the transverse bores (17, 18) in the valve sleeve (11) and, furthermore, a fluid connection of the connector P to the armature space (24) is blocked.

4. Solenoid valve (1) according to Claim 1, **characterized in that** three fluid channels (14, 15, 16) for the connectors P, T and A run in cavities (28, 29, 30) of the magnetic pole (8), wherein the lengths of the cavities (28, 29, 30) are dimensioned in such a way that firstly there is a fluid connection to in each case one sealed flange zone (21, 22, 23) of a flange surface (20), and secondly there is in each case a fluid connection to the first and the second transverse bore (17, 18) and to a third transverse bore (19) in the valve sleeve (11), and, furthermore, in each case a fluid connection of the connectors P and A to the armature space (24) is blocked.

5. Solenoid valve (1) according to Claim 1, **characterized in that** three fluid channels (14, 15, 16) for the connectors P, T and A run in flattened portions (25, 26, 27) and/or grooves of the valve sleeve (11), wherein the lengths of the flattened portions (25, 26, 27) and/or grooves are dimensioned in such a way that firstly there is a fluid connection to in each case one sealed flange zone (21, 22, 23) of a flange surface (20), and secondly there is in each case a fluid connection to the first and the second transverse bore (17, 18) and a third transverse bore (19) in the valve sleeve (11), and, furthermore, in each case a fluid connection of the connectors P and A to the armature space (24) is blocked.

6. Solenoid valve (1) according to one of the preceding claims, **characterized in that** the magnet armature (4) is radially mounted firstly in a bearing (32) and secondly by a slide head (9) of the valve slide (12), wherein radial forces can be transmitted from the magnet armature (4) to the slide head (9).

7. Solenoid valve (1) according to one of Claim 6, **characterized in that** the effective length of the bearing (32) for mounting the magnet armature (4) corresponds to at least one third of the length of the magnet armature (4), preferably half the length and more preferably 70% of the length, wherein the valve slide (12) has a flattened slide head (9) which permits only a transmission of an axial pressure force from the magnet armature (4) to the slide head (9).

8. Solenoid valve (1) according to Claim 6, **characterized in that** the magnet armature (4) touches the slide head (9) by way of a conical surface.

9. Solenoid valve (1) according to Claim 7, **characterized in that** the magnet armature (4) touches the slide head (9) of the valve slide (12) by way of a planar surface.

10. Solenoid valve (1) according to either of Claims 2 or 3, **characterized in that** the flange surface (20) has three flange zones (21, 22, 23), wherein the third flange zone (23) is fluidically connected to a central bore (31) in the valve sleeve (11), which receives the valve slide (12), and wherein the three flange zones (21, 22, 23) are sealed off from one another and from the surroundings by a shaped seal (35).

11. Solenoid valve (1) according to either of Claims 4 or 5, **characterized in that** the three flange zones (21, 22, 23) are sealed off from one another and from the surroundings by a shaped seal (35).

12. Solenoid valve (1) according to either of Claims 10 or 11, **characterized in that** the shaped seal (35) contains three filter mats (36, 37, 38) which are arranged in the flange zones (21, 22, 23) and are connected to the material of the shaped seal (35) in a force-fitting, form-fitting or integrally joined manner.

13. Pressure regulating valve, having a solenoid valve (1) according to one of the preceding claims, **characterized in that** a first pressurized volume at a fluidic pressure to be regulated can be connected to the connector A, a second volume at a supply pressure can be connected to the connector P, and a line leading to a storage tank can be connected to the connector T, wherein a force comparison between the force of the electromagnet (2) and the pressure force of the fluid at the connector A takes place in the solenoid valve (1) at the valve slide (12), and wherein, in the event that the force of the electromagnet predominates, a fluidic connection takes place in the valve assembly (10) between the connector P and the connector A, and wherein, in the event that the pressure force predominates, a fluidic connection takes place between the connector A and the connector T.

14. Fluidic switching valve, having a solenoid valve (1) according to one of Claims 1 to 12, **characterized in that**, when the electromagnet (2) is not energized, there is a fluidic connection in the valve assembly (10) between the connector A and the connector T, and **in that**, when the electromagnet (1) is energized sufficiently, there is a fluidic connection in the valve assembly (10) between the connector P and the connector A.

15. Fluidic switching valve, having a solenoid valve (1) according to one of Claims 1 to 12, **characterized in that**, when the electromagnet (2) is not energized, there is a fluidic connection in the valve assembly (10) between the connector P and the connector A, and **in that**, when the electromagnet (1) is energized sufficiently, there is a fluidic connection in the valve assembly (10) between the connector A and the connector T.

## Revendications

1. Électrovanne (1), possédant un électroaimant (2) qui contient au moins une bobine magnétique (3), une armature magnétique (4), un noyau polaire (5), une culasse magnétique (6) et un boîtier (7) fermant le circuit magnétique, et un sous-ensemble vanne (10) qui comprend au moins un manchon de vanne (11), un tiroir de vanne (12) et un ressort de rappel (13), le sous-ensemble vanne (10) étant entouré par le boîtier (7) dans son extension axiale,
**caractérisée en ce que**
le noyau polaire (5) est constitué d'un pôle magnétique (8) extérieur et d'un manchon de vanne (11) entouré par le pôle magnétique (8), au moins deux canaux à fluide (14, 15) suivant un tracé dans la direction axiale entre le manchon de vanne (11) et le pôle magnétique (8) dans des zones délimitées de manière étanche aux fluides sur le pourtour du manchon de vanne (11) et/ou à l'intérieur du pôle magnétique (8),
et le manchon de vanne (11) possédant au moins deux alésages transversaux (17, 18) ou d'autres espaces creux qui suivent un tracé perpendiculaire à l'axe central du manchon de vanne (11), qui sont reliés de manière fluidique aux canaux à fluide (14, 15) et coopèrent avec des arêtes de commande du tiroir de vanne (12) en fonction d'une position axiale du tiroir de vanne (12).

2. Électrovanne (1) selon la revendication 1, **caractérisée en ce que** les au moins deux canaux à fluide (14, 15) pour les raccords P et T suivent un tracé dans des cavités (28, 29) du pôle magnétique (8), les longueurs axiales des cavités (28, 29) étant dimensionnées de telle sorte que, d'une part, il existe une liaison fluidique respectivement avec une zone de bride étanche (21, 22) d'une surface de bride (20) et, d'autre part, il existe respectivement une liaison fluidique avec les alésages transversaux (17, 18) dans le manchon de vanne (11) et, en outre, une liaison fluidique du raccord P vers une chambre d'armature (24) est bloquée.

3. Électrovanne (1) selon la revendication 1, **caractérisée en ce que** les canaux à fluide (14, 15) pour les raccords P et T suivent un tracé dans des méplats (25, 26) et/ou des rainures du manchon de vanne (11), les longueurs axiales des méplats (25, 26) et/ou des rainures étant dimensionnées de telle sorte que, d'une part, il existe une liaison fluidique respectivement avec une zone de bride étanche (21, 22) d'une surface de bride (20) et, d'autre part, il existe respectivement une liaison fluidique avec les alésages transversaux (17, 18) dans le manchon de vanne (11) et, en outre, une liaison fluidique du raccord P vers la chambre d'armature (24) est bloquée.

4. Électrovanne (1) selon la revendication 1, **caractérisée en ce que** trois canaux à fluide (14, 15, 16) pour les raccords P, T et A suivent un tracé dans des cavités (28, 29, 30) du pôle magnétique (8), les longueurs des cavités (28, 29, 30) étant dimensionnées de telle sorte que, d'une part, il existe une liaison fluidique respectivement avec une zone de bride étanche (21, 22, 23) d'une surface de bride (20) et, d'autre part, il existe respectivement une liaison fluidique avec le premier et le deuxième alésage transversal (17, 18) et avec un troisième alésage transversal (19) dans le manchon de vanne (11) et, en outre, une liaison fluidique des raccords P et A vers la chambre d'armature (24) est bloquée.

5. Électrovanne (1) selon la revendication 1, **caractérisée en ce que** trois canaux à fluide (14, 15, 16) pour les raccords P, T et A suivent un tracé dans des méplats (25, 26, 27) et/ou des rainures du manchon de vanne (11), les longueurs des méplats (25, 26, 27) et/ou des rainures étant dimensionnées de telle sorte que, d'une part, il existe une liaison fluidique respectivement avec une zone de bride étanche (21, 22, 23) d'une surface de bride (20) et, d'autre part, il existe respectivement une liaison fluidique avec le premier et le deuxième alésage transversal (17, 18) et un troisième alésage transversal (19) dans le manchon de vanne (11) et, en outre, une liaison fluidique des raccords P et A vers la chambre d'armature (24) est bloquée.

6. Électrovanne (1) selon l'une des revendications précédentes, **caractérisée en ce que** l'armature magnétique (4) est supportée radialement d'une part dans un palier (32) et d'autre part par une tête de tiroir (9) du tiroir de vanne (12), les forces radiales pouvant être transmises de l'armature magnétique (4) à la tête de tiroir (9).

7. Électrovanne (1) selon l'une des revendication 6, **caractérisée en ce que** la longueur effective du palier (32) destiné à supporter l'armature magnétique (4) correspond au moins à un tiers de la longueur de l'armature magnétique (4), de préférence à la moitié de la longueur et de préférence à 70 % de la longueur, le tiroir de vanne (12) possédant une tête de tiroir (9) aplatie qui autorise uniquement une transmission d'une force de pression axiale de l'armature magnétique (4) sur la tête de tiroir (9).

8. Électrovanne (1) selon la revendication 6, **caractérisée en ce que** l'armature magnétique (4) vient en contact avec la tête de tiroir (9) par une surface conique.

9. Électrovanne (1) selon la revendication 7, **caractérisée en ce que** l'armature magnétique (4) vient en contact avec la tête de tiroir (9) du tiroir de vanne (12) par une surface plane.

10. Électrovanne (1) selon l'une des revendications 2 ou 3, **caractérisée en ce que** la surface de bride (20) présente trois zones de bride (21, 22, 23), la troisième zone de bride (23) étant reliée de manière fluidique à un alésage central (31) dans le manchon de vanne (11), lequel reçoit le tiroir de vanne (12), et les trois zones de bride (21, 22, 23) sont étanchéifiées les unes par rapport aux autres et par rapport à l'environnement par une garniture d'étanchéité moulée (35).

11. Électrovanne (1) selon l'une des revendications 4 ou 5, **caractérisée en ce que** les trois zones de bride (21, 22, 23) sont étanchéifiées les unes par rapport aux autres et par rapport à l'environnement par une garniture d'étanchéité moulée (35).

12. Électrovanne (1) selon l'une des revendications 10 ou 11, **caractérisée en ce que** la garniture d'étanchéité moulée (35) contient trois nattes filtrantes (36, 37, 38), lesquelles sont disposées dans les zones de bride (21, 22, 23) et sont reliées au matériau de la garniture d'étanchéité moulée (35) par adhérence, par complémentarité de forme ou par liaison de matière.

13. Vanne de régulation de pression, possédant une électrovanne (1) selon l'une des revendications précédentes, **caractérisée en ce qu'**un premier volume sous pression avec une pression fluidique à réguler peut être raccordé au raccord A, un deuxième volume avec une pression d'alimentation peut être raccordé au raccord P et une conduite menant à un réservoir de stockage peut être raccordée au raccord T, une comparaison de force entre la force de l'électroaimant (2) et la force de pression du fluide au niveau du raccord A s'effectuant dans l'électrovanne (1) au niveau du tiroir de vanne (12), et dans le cas où la force de l'électroaimant prédomine, une liaison fluidique entre le raccord P et le raccord A a lieu et, dans le cas où la force de pression prédomine, une liaison fluidique entre le raccord A et le raccord T a lieu dans le sous-ensemble vanne (10).

14. Vanne de commutation fluidique, possédant une électrovanne (1) selon l'une des revendications 1 à 12, **caractérisée en ce que** lorsque l'électroaimant (2) n'est pas alimenté en courant, il existe une liaison fluidique entre le raccord A et le raccord T dans le sous-ensemble vanne (10) et **en ce que** lorsque l'électroaimant (1) est suffisamment alimenté en courant, il existe une liaison fluidique entre le raccord P et le raccord A dans le sous-ensemble vanne (10).

15. Vanne de commutation fluidique, possédant une électrovanne (1) selon l'une des revendications 1 à 12, **caractérisée en ce que** lorsque l'électroaimant (2) n'est pas alimenté en courant, il existe une liaison fluidique entre le raccord P et le raccord A dans le sous-ensemble vanne (10) et **en ce que** lorsque l'électroaimant (1) est suffisamment alimenté en courant, il existe une liaison fluidique entre le raccord A et le raccord T dans le sous-ensemble vanne (10).
